# EUROPÄISCHE PATENTSCHRIFT

(11) **EP 0 630 359 B1**
(45) Veröffentlichungstag und Bekanntmachung des Hinweises auf die Patenterteilung: **13.12.1995**
(21) Anmeldenummer: 93905309.6
(22) Anmeldetag: 06.03.1993
(51) Int. Cl.: C04B 35/03, C04B 35/04

(54) **VERFAHREN ZUR HERSTELLUNG EINER FEUERFESTEN MASSE UND EINES FEUERFESTEN FORMTEILS**
PROCESS FOR PRODUCING A REFRACTORY MASS AND A REFRACTORY MOULDING
PROCEDE DE FABRICATION D'UNE MASSE REFRACTAIRE ET D'UNE PIECE MOULEE REFRACTAIRE

(30) Priorität: 08.03.1992 DE 4207249
(43) Veröffentlichungstag der Anmeldung: 28.12.1994
(73) Patentinhaber: VEITSCH-RADEX AKTIENGESELLSCHAFT FÜR FEUERFESTE ERZEUGNISSE, A-1040 Wien (AT)
(72) Erfinder: REITERER, Franz, A-8700 Leoben (AT); DÖSINGER, Klaus, A-8700 Leoben (AT)
(74) Vertreter: Becker, Thomas, Dr., Dipl.-Ing.
(86) Internationale Anmeldenummer: EP9300511
(87) Internationale Veröffentlichungsnummer: WO9317979

(56) Entgegenhaltungen:
- WO-A-86/05481
- WO-A-88/01990
- BE-A- 660 583
- FR-A- 2 399 987
- GB-A- 2 044 750
- US-A- 4 061 501
- US-A- 4 558 019

## Beschreibung

Die Erfindung betrifft ein Verfahren zur Herstellung eines feuerfesten, kohlenstoffhaltigen, keramischen Formteils, sowie einer feuerfesten, kohlenstoffhaltigen, keramischen Masse.

Die Bindung von feuerfesten Werkstoffen und Formteilen mit Steinkohlenprodukten wie Teer oder Pech ist seit langem bekannt. Während der Temperaturbehandlung der Produkte kommt es zur Ausbildung einer Bindepechmatrix. Der dabei gebildete Sekundärkohlenstoff ist für die Festigkeit des Produktes bei der Einsatztemperatur, gleichzeitig aber auch für eine günstige Beständigkeit gegenüber aggressiven (metallurgischen) Schlacken sowie eine infiltrationshemmende Wirkung verantwortlich. Die Ausbildung der Bindepechmatrix ist jedoch von der Anwesenheit aromatischer Verbindungen im Ausgangs-Bindemittel abhängig. Im Fall des Steinkohlenteers sind dies kondensierte polyzyklische aromatische Verbindungen, die als carcinogen gelten.

Es wird heute deshalb zunehmend dazu übergegangen, anstelle von Pech oder Teer Kunstharze als Bindemittel einzusetzen. Hierdurch entfällt das Problem der polyzyklischen Aromaten. Bei Verwendung von Phenolharzen (DE 32 12 671 A1) wird aber dem darin enthaltenen Monomer Phenol sowie den Abbauprodukten nach einer Temperaturbehandlung ebenfalls eine gesundheitsschädliche Wirkung zugeschrieben. Daneben beschreiben die DE 37 21 642 C2 alicyclische Kohlenwasserstoffprodukte vom Terpen- oder Naturharztyp und die DE 39 17 965 C1 diverse Harze, insbesondere Epoxidharz als Bindemittel für feuerfeste Massen. Kohlenwasserstoff- und Terpenharze werden aus Rückständen der Erdölverararbeitung oder aus Steinkohlenteer gewonnen. Alle diese Bindemittel weisen als gemeinsames Merkmal einen erheblichen Verkokungsrückstand nach Pyrolyse auf. Im übrigen kommt es auch hier bei der Verkokung zur Ausbildung eines festigkeitsfördernden Kohlenstoffgerüstes, wobei der aus Kunstharzen entstehende Kohlenstoffrückstand aus struktureilen Gründen jedoch weniger oxidationsbeständig ist als der aus Pech oder Teer gebildete Sekundärkohlenstoff.

Aus der DE 32 12 671 C2 sind feuerfeste kohlenstoffhaltige Steine bekannt, die neben dem basischen feuerfesten Matrixmaterial ein organisches Polymer, nämlich ein Resorcin-Polymer, als Bindemittel enthalten. Bei der Temperaturbehandlung derartiger Steine werden ebenfalls gesundheitsschädliche Rückstände gebildet, die jedoch zur Ausbildung eines Sekundär-Kohlanstoffgerüsts in Kauf genommen werden.

Aus der US 4,061,501 A ist ein Verfahren zur Herstellung eines feuerfesten Auskleidungsmaterials bekannt, bei dem feuerfeste Körner < 6 mm aus dar Gruppe Magnesit, Dolomit etc., 2-15 Gew.-% eines Binders aus der Gruppe Bindeton, Phosphorsäure etc., 0,4 bis 4,0 Gew.-% kolloidaler Kieselsäure mit einem kohlenstoffhaltigen Material wie Koks oder Graphit (gesiebt auf < 1 mm) vermischt una verarbeitet werden.

Dar Erfindung liegt insoweit die Aufgabe zugrunde, ein Verfahren zur Herstellung einer feuerfesten, kohlenstoffhaltigen, keramischen Masse und eines Formteils anzugeben, das eine schadstofffreie Herstellung und Anwendung ermöglicht, ohne dabei einen nennenswerten Festigkeitsverlust und ohne eine Verschlechterung der Infiltrationsbeständigkeit beziehungsweise Beständigkeit gegenüber aggressiven Schlacken in Kauf nehmen zu müssen.

Der Erfindung liegt die Erkenntnis zugrunde, daß dieses Ziel auch dann erreicht werden kann, wenn als Bindemittel ein nicht verkokendes Polymer eingesetzt wird. Dies muß überraschen, weil im Stand der Technik davon ausgegangen wurde, daß eine ausreichende Grünstandsfestigkeit sowie eine ausreichende Festigkeit nach einer Temperung nur dann erreicht werden kann, wenn über das Bindemittel ein entsprechendes Kohlenstoffgerüst ausgebildet wird.

Durch die Verwendung nicht aromatischer organischer Polymerverbindungen als Bindemittel wird aber bewußt auf eine Kohlenstoffbindung durch das Bindemittel verzichtet.

Dabei wurde festgestellt, daß eine ausreichende Grünstandsfestigkeits auch mit Hilfe eines Bindemittels erreicht werden kann, dessen organische Bestandteile unter Temperatureinfluß rückstandsfrei entfernt werden und somit nicht mehr zur Ausbildung eines Sekundär-Kohlenstoffgerüsts zur Verfügung stehen, wie dies im Stand der Technik als unverzichtbar angesehen wird. Bei niedrigen Temperaturen (bis circa 300° C) wirkt die Polymerverbindung wie ein "Klebstoff" und die übrigen Mischungsbestandteile, nämlich das feuerfeste Matrixmaterial und der feinteilige, elementare Kohlenstoff werden quasi miteinander verklebt. Weiters wurde überraschend festgestellt, daß auch nach der Zersetzung der nicht aromatischen, vorzugsweise aliphatischen Polymerverbindung eine ausreichende weitere Festigkeit des Steins gewährleistet ist, wobei der feinteilige elementare Kohlenstoff dann die "Binderfunktion" übernimmt.

Demzufolge betrifft die Erfindung in ihrer allgemeinsten Ausführungsform ein Verfahren zur Herstellung eines feuerfesten, kohlenstoffhaltigen, keramischen Formteils, bei dem ein feuerfestes Matrixmaterial und feinteiliger elementarer Kohlenstoff gemeinsam mit einer nicht aromatischen, organischen Polymerverbindung homogen vermischt werden und die Mischung anschließend zu Formteilen verarbeitet und die Formteile getempert werden.

Während also die Polymerverbindung für die Grünstandsfestigkeit des zum Beispiel gepreßten Steines verantwortlich ist, übernimmt der feinteilige elementare Kohlenstoff die Binderfunktion bei höheren Anwendungstemperaturen.

Neben diesem feinteiligen Kohlenstoff können weitere Kohlenstoffträger in gröberer Fraktion (bis 0,5 mm) zugemischt werden, die jedoch ausschließlich metallurgische Funktionen haben (Erhöhung der Infiltrationsbeständigkeit und Beständigkeit gegenüber aggressiven Schlacken).

Die organische Polymerverbindung wird vorzugsweise als wässrige Lösung zugegeben. Sie läßt sich auf diese Weise leicht und homogen mit den übrigen Komponenten vermischen.

Dabei sieht eine vorteilhafte Ausführungsform vor, auch den feinteiligen, elementaren Kohlenstoff vor der Zugabe zu dem vorzugsweise oxidischen feuerfesten Matrixmaterial in der genannten wässrigen Lösung zu dispergieren, um eine homogene Verteilung des Kohlenstoffs bei der anschließenden Vermischung zu optimieren.

Die feinteilige Kohlenstoffkomponente wird zum Beispiel in Form von Ruß, Graphit oder Koks zugegeben. Je feinteiliger dieser Kohlenstoffanteil ist, um so homogener kann er in der Mischung verteilt werden und um so höher ist seine Binderfunktion nach der Zersetzung des polymeren Bindemittels.

Der feinteilige Kohlenstoff sollte deshalb in einer Kornfraktion kleiner 1 »m zugegeben werden. Sein Mengenanteil, bezogen auf die Gesamtmischung, beträgt vorzugsweise 0,1 bis 10,0 Gew.-%, wobei innerhalb dieses Bereiches ein Anteil von 1 bis 5 Gew.-% insbesondere bei feinstteiligem Kohlenstoff (unter 0,05 »m) ausreicht.

Es ist aber ohne weiteres auch möglich, den feinteiligen Kohlenstoff mit dem (oxidischen) Feuerfestmaterial vorzumischen oder alle Mischungs-Komponenten getrennt einem Mischaggregat aufzugeben.

Nicht aromatische, organische Polymerverbindungen sind dadurch gekennzeichnet, daß sich ihr organischer Teil rückstandsfrei und ohne Schadstoffemissionen bei höheren Temperaturen zersetzt. "Rückstandsfrei" bzw. "ohne Verkokungsrückstand" ist so zu verstehen, daß kein, die Festigkeit der Masse oder des Formteils nennenswert beeinflussendes Sekundär-Kohlenstoffgerüst unter Temperatureinfluß ausgebildet wird.

Es verbleiben allenfalls nicht schädliche, anorganische Reste. Hierin liegt ein wesentliches Merkmal der Erfindung. Nach einer Ausführungsform soll der Verkokungsrückstand (nach Conradsen) maximal 0,5 Gew.-% betragen.

Aliphatische Verbindungen der genannten Art beschreiben einen Sammelbegriff für organische Verbindungen, deren C-Atome in geraden oder verzweigten Ketten angeordnet sind; im Gegensatz zu den isozyklischen Verbindungen, bei denen die C-Atome Ringe bilden. Zu diesen aliphatischen organischen Polymeren gehören Polyalkohole, Polycarbonsäuren, aber auch Methyl-, Äthyl-, Carboxymethyl-, oder Carboxyäthylcellulosen.

Das polymere Bindemittel wird vorzugsweise in einer Menge von 0,05 bis 5,0 Gew.-%, bezogen auf die Gesamtmischung, eingesetzt, wobei in der Regel ein Mengenanteil von 0,1 bis 0,5 Gew.-% ausreicht.

Der vorzugsweise als wässrige Lösung eingesetzten Polymerverbindung kann - bei Bedarf - ein Dispergiermittel in geringen Mengenanteilen (0,1 bis 2,0 Gew.-%, bezogen auf die wässrige Polymerlösung) zugegeben werden.

Als feuerfestes Matrixmaterial können unterschiedlichste Werkstoffe Anwendung finden. Besonders bevorzugt sind neben nicht oxidischen Werkstoffen basische oxidische feuerfeste Werkstoffe wie Magnesiasinter oder Schmelzmagnesia beziehungsweise entsprechende Spinelle. Das feuerfeste Matrixmaterial wird in üblichen Kornfraktionen, vorzugsweise kleiner 6 mm eingesetzt.

Optional können der Mischung auch weitere Zusatzstoffe, wie Phosphate, beispielsweise Natriumpolyphosphate oder Metallpulver zugegeben werden. Während die Phosphate insbesondere im Temperaturbereich von 200 bis 1.000° C zusätzlich festigkeitssteigernd wirken, kommt es durch die Verwendung von Metallpulvern bei der Einsatztemperatur (beispielsweise in einem metallurgischen Schmelzgefäß) zur Ausbildung von feuerfesten, stabilen Carbiden durch Reaktion mit dem feinteiligen, elementaren Kohlenstoff. Derartige Metallpulver bestehen beispielsweise aus Silicium oder Aluminium.

Weitere Merkmale der Erfindung ergeben sich aus den übrigen Patentansprüchen sowie den sonstigen Anmeldungsunterlagen.

Die Erfindung wird nachstehend anhand eines Ausführungsbeispieles näher erläutert:
Zur Herstellung kohlenstoffhaltiger Magnesiasteine wird als feuerfestes oxidisches Matrixmaterial ein Magnesiasinter in einer Kornfraktion kleiner 6 mm verwendet.

Als feinteiliger Kohlenstoff wird Ruß eingesetzt, und zwar mit einer Teilchengröße unter 1 »m. Der Ruß wird in einer wässrigen Lösung dispergiert, die neben 40 Gew.-% Ruß noch 6 Gew.-% Polyacrylat als aliphatische, organische Polymerverbindung und 54 Gew.-% Wasser enthält.

Anschließend werden 90 Gew.-Teile Sintermagnesia mit 5 Gew.-Teilen Flockengraphit und 5 Gew.-Teilen der wässrigen Lösung homogen vermischt (entsprechend, einem Anteil von 0,3 Gew.-% Polyacrylat, bezogen auf die Gesamtmischung). Die Mischung wird nach Homogenisierung zu Steinen verpreßt und bei circa 250° getempert.

Bis zur Temperung übernimmt das Polyacrylat eine Binderfunktion und sichert die Grünstandsfestigkeit der Steine. Während der Temperung brennt das Polyacrylat zumindest teilweise aus und die weitere Festigkeit des Steins wird maßgeblich über die feinverteilten Rußpartikel sichergestellt.

Bei höheren (Anwendungs) Temperaturen zersetzt sich auch etwaig noch verbliebenes polymeres Bindemittel, und zwar ohne Ausbildung von Sekundärkohlenstoff.

Die so hergestellten Steine sind schadstofffrei und weisen günstige Eigenschaften im Einsatz auf, die mit denen von teer- oder pechgebundenen beziehungsweise harzgebundenen Steinen vergleichbar sind.

## Patentansprüche

1. Verfahren zur Herstellung von feuerfesten, kohlenstoffhaltigen, keramischen Formteilen, bei dem ein feuerfestes Matrixmaterial und feinteiliger elementarer Kohlenstoff gemeinsam mit einer nicht aromatischen, organischen Polymerverbindung mit einem Verkokungsrückstand (nach Conradson) von weniger als 0,5 Gew.-% homogen vermischt, die Mischung anschließend zu Formteilen verarbeitet und die Formteile danach getempert werden.

2. Verfahren zur Herstellung von feuerfesten, kohlenstoffhalhaltigen, keramischen Massen, bei dem ein feuerfestes Matrixmaterial mit feinteiligem, elementarem Kohlenstoff gemeinsam mit einer nicht aromatischen Polymerverbindung mit einem Verkokungsrückstand (nach Conradson) von weniger als 0,5 Gew.-% homogen vermischt wird.

3. Verfahren nach Anspruch 1 oder 2, bei dem als nicht aromatische, organische Polymerverbindung eine aliphatische Polymerverbindung zugegeben wird.

4. Verfahren nach einem der Ansprüche 1 bis 3, bei dem die nicht aromatische, organische Polymerverbindung als wässrige Lösung (Suspension) zugegeben wird.

5. Verfahren nach einem der Ansprüche 1 bis 3, bei dem die nicht aromatische, organische Polymerverbindung als nicht wässrige Lösung (Suspension) zugegeben wird.

6. Verfahren nach einem der Ansprüche 1 bis 5, bei dem der feinteilige, elementare Kohlenstoff in Form von Ruß, Graphit oder Koks zugegeben wird.

7. Verfahren nach einem der Ansprüche 1 bis 6, bei dem der feinteilige, elementare Kohlenstoff in einer Korngröße kleiner 1,0 »m zugegeben wird.

8. Verfahren nach einem der Ansprüche 1 bis 7, bei dem der feinteilige, elementare Kohlenstoff in einer Menge von 0,1 bis 10,0 Gew.-%, bezogen auf die Gesamtmischung, zugegeben wird.

9. Verfahren nach Anspruch 8, bei dem der feinteilige, elementare Kohlenstoff in einer Menge von 1,0 bis 5,0 Gew.-%, bezogen auf die Gesamtmischung, zugegeben wird.

10. Verfahren nach einem der Ansprüche 1 bis 9, bei dem der Mischung neben dem feinteiligen, elementaren Kohlenstoff eine weitere kohlenstoffhaltige Komponente in gröberer Kornfraktion zugegeben wird.

11. Verfahren nach Anspruch 10, bei dem die gröbere kohlenstoffhaltige Komponente in einer Menge bis zu einem Gesamt-Kohlenstoffgehalt von 30,0 Gew.-%, bezogen auf die Gesamtmischung, zugegeben wird.

12. Verfahren nach einem der Ansprüche 1 bis 11, bei dem die nicht aromatische organische Polymerverbindung und der feinteilige, elementare Kohlenstoff in Form einer vorgemischten, wässrigen oder nicht wässrigen Dispersion zugegeben werden.

13. Verfahren nach einem der Ansprüche 1 bis 12, bei dem als feuerfestes Matrixmaterial ein oxidisches Material zugegeben wird.

14. Verfahren nach einem der Ansprüche 1 bis 13 unter Verwendung von Magnesiasinter, Schmalzmagnesia oder Magnesiaaluminat-Spinell als feuerfestes Matrixmaterial

15. Verfahren nach einem der Ansprüche 1 bis 14, bei dem das feuerfeste Matrixmaterial in einer Kornfraktion kleiner 6 mm eingesetzt wird.

16. Verfahren nach einem der Ansprüche 1 bis 15, bei dem die nicht aromatische organische Polymerverbindung in Form von Polyacrylaten, Polycarbonsäuren, Polyvinylen, Polyvinylsäuren, Polyalkoholen, Methyl-, Äthyl-, Carboxymethyl- und/oder Carboxyäthylcallulosen zugegeben wird.

17. Verfahren nach einem der Ansprüche 1 bis 16, bei dem die nicht aromatische organische Polymerverbindung in einer Menge von 0,05 bis 5,0 Gew.-%, bezogen auf die Gesamtmischung, zugegeben wird.

18. Verfahren nach Anspruch 17, bei dem die nicht aromatische organische Polymerverbindung in einer Menge von 0,1 bis 0,5 Gew.-%, bezogen auf die Gesamtmischung, zugegeben wird.

19. Verfahren nach einem der Ansprüche 4 bis 18, bei dem der Polymerlösung ein Dispergiermittel in einer Menge von 0,1 bis 2,0 Gew.-%, bezogen auf die Polymerlösung zugegeben wird.

20. Verfahren nach einem der Ansprüche 1 oder 3 bis 16, bei dem die Temperung in einem Temperaturbereich zwischen 130 und 300° C durchgeführt wird.

21. Verfahren nach einem der Ansprüche 2 bis 20, bei dem die Masse vor Ort verarbeitet und nach der Verarbeitung getempert und gebrannt wird.

## Claims

1. Process for preparing carbon-containing refractory ceramic moldings, in which a refractory matrix material and finely dispersed elementary carbon are homogeneously mixed, together with a non-aromatic organic polymer compound with a carbon residue (according to Conradson) of less than 0.5 wt.%, the mixture is subsequently processed into moldings, and the moldings are subsequently heat- treated.

2. Process for preparing carbon-containing refractory ceramic masses, in which a refractory matrix material is mixed homogeneously with finely dispersed elementary carbon, together with a non-aromatic polymer compound with a carbon residue (according to Conradson) of less than 0.5 wt.%.

3. Process in accordance with claim 1 or 2, in which an aliphatic polymer compound is added as the non-aromatic organic polymer compound.

4. Process in accordance with one of the claims 1 through 3, in which the non-aromatic organic polymer compound is added as an aqueous solution (suspension).

5. Process in accordance with one of the claims 1 through 3, in which the non-aromatic organic polymer compound is added as a non-aqueous solution (suspension).

6. Process in accordance with one of the claims 1 through 5, in which the finely dispersed elementary carbon is added in the form of carbon black, graphite or coke.

7. Process in accordance with one of the claims 1 through 6, in which the finely dispersed elementary carbon is added as a particle fraction of less than 1.0 »m.

8. Process in accordance with one of the claims 1 through 7, in which the finely dispersed elementary carbon is added in an amount of 0.1 to 10.0 wt.% relative to the total mixture.

9. Process in accordance with claim 8, in which the finely dispersed elementary carbon is added in an amount of 1.0 to 5.0 wt.% relative to the total mixture.

10. Process in accordance with one of the claims 1 through 9, in which another carbon-containing component is added as a coarser particle fraction to the mixture besides the finely dispersed elementary carbon.

11. Process in accordance with claim 10, in which the coarser carbon-containing component is added in such an amount that the total carbon content will be up to 30.0 wt.% relative to the total mixture.

12. Process in accordance with one of the claims 1 through 11, in which the non-aromatic organic polymer compound and the finely dispersed elementary carbon are added in the form of a premixed, aqueous or non-aqueous dispersion.

13. Process in accordance with one of the claims 1 through 12, in which an oxidic material is added as the refractory matrix material.

14. Process in accordance with one of the claims 1 through 13, using sintered magnesia, fused magnesia or magnesia-aluminate spinel as the refractory matrix material.

15. Process in accordance with one of the claims 1 through 14, in which the refractory matrix material is used as a particle fraction of less than 6 mm.

16. Process in accordance with one of the claims 1 through 15, in which the non-aromatic organic polymer compound is added in the form of polyacrylates, polycarboxylic acids, polyvinyls, polyvinylic acids, polyalcohols, methyl, ethyl, carboxymethyl-, and/or carboxyethyl celluloses.

17. Process in accordance with one of the claims 1 through 16, in which the non-aromatic organic polymer compound is added in an amount of 0.05 to 5.0 wt.% relative to the total mixture.

18. Process in accordance with claim 17, in which the non-aromatic organic polymer compound is added in an amount of 0.1 to 0.5 wt.% relative to the total mixture.

19. Process in accordance with one of the claims 4 through 18, in which a dispersing agent is added to the polymer solution in an amount of 0.1 to 2.0 wt.% relative to the polymer solution.

20. Process in accordance with one of the claims 1 or 3 through 16, in which the heat treatment is carried out in a temperature range of 130°C to 300°C.

21. Process in accordance with one of the claims 2 through 20, in which the mass is processed on site and is heat-treated and fired after the processing.

## Revendications

1. Procédé de fabrication de pièce céramiques moulées, réfractaires, contenant du carbone, dans lequel un matériau de matrice réfractaire et du carbone élémentaire finement divisé sont mélangés, conjointement avec un compose polymère organique, non aromatique, ayant un résidu de cokéfaction (d'après Conradson) inférieur à 0,5 % en poids mélangé de façon homogène, le mélange étant ensuite traité pour donner des pièces moulées et les pièces moulées étant ensuite durcies par trempe.

2. Procédé de fabrication de masses céramiques réfractaires, contenant du carbone, dans lequel un matériau de matrice réfractaire est mélangé de façon homogène avec du carbone élémentaire finement divisé, conjointement avec un composé polymère aromatique, ayant un résidu de cokéfaction (d'après Conradson) inférieur à 0,5 % en poids.

3. Procédé selon la revendication 1 ou la revendication 2, dans lequel on ajoute à titre de composé polymère organique, non aromatique, un composé polymère aliphatique.

4. Procédé selon l'une des revendications 1 à 3, dans lequel le composé polymère organique non aromatique est ajouté sous forme de solution aqueuse (suspension)

5. Procédé selon l'une des revendication 1 à 3, dans lequel le composé polymère organique non aromatique est ajouté sous forme de solution non aqueuse (suspension)

6. Procédé selon l'une des revendications 1 à 5, dans lequel le carbone élémentaire finement divisé est ajouté sous forme de suie, de graphite ou de coke.

7. Procédé selon l'une des revendications 1 à 6, dans lequel le carbone élémentaire finement divisé est ajouté sous une taille de grain inférieure à 1,0 »m.

8. Procédé selon l'une des revendications 1 à 7, dans lequel le carbone élémentaire finement divisé est ajouté en une quantité de 0,1 à 10,0 % en poids, par rapport au mélange total.

9. Procédé selon la revendication 8, dans lequel le carbone élémentaire finement divisé est ajouté en une quantité de 1,0 à 5,0 % en poids, par rapport au mélange total.

10. Procédé selon l'une des revendications 1 à 9, dans lequel au mélange est ajouté, outre le carbone élémentaire finement divisé, un autre composant contenant du carbone, ayant une fraction granulométrique plus grosse.

11. Procédé selon la revendication 10, dans lequel les composants plus gros, contenant du carbone, sont ajoutés en une quantité allant jusqu'à une teneur en carbone totale de 30 % en poids, par rapport au mélange total.

12. Procédé selon l'une des revendications 1 à 11, dans lequel le composé polymère organique non aromatique et le carbone élémentaire finement divisé sont ajoutés sous la forme d'une dispersion pré-mélangée, aqueuse ou non aqueuse.

13. Procédé selon l'une des revendications 1 à 12, dans lequel est ajouté à titre de matériau de matrice réfractaire un matériau par voie d'oxydation.

14. Procédé selon l'une des revendications 1 à 13, avec utilisation de fritté de magnésie, de magnésie fondue ou de spinelle d'aluminate de magnésie, comme matériau de matériau réfractaire.

15. Procédé selon l'une des revendications 1 à 14, dans lequel le matériau de matrice réfractaire est introduit en une fraction granulométrique inférieure à 6 mm.

16. Procédé selon l'une des revendications 1 à 15, dans lequel le composé, polymère organique non aromatique est ajouté sous forme de polyacrylates, acides polycarboniques, acides polyvinyliques, polyalcools, méthyl-, éthyl-, carboxyméthyl- et/ou carboxyéthylcelluloses.

17. Procédé selon l'une des revendications 1 à 16, dans lequel le composé polymère organique non aromatique est ajouté en une quantité de 0,05 à 5,0 % en poids par rapport au mélange total.

18. Procédé selon la revendication 17, dans lequel le composé polymère organique non aromatique est ajouté en une quantité de 0,1 à 0,5 % en poids par rapport au mélange total.

19. Procédé selon l'une des revendications 4 à 18, dans lequel à la solution polymère est ajouté un agent dispersant, en une quantité de 0,1 à 2,0 % en poids par rapport à la solution polymère.

20. Procédé selon l'une des revendications 1 ou 3 à 16, dans lequel la trempe est effectuée dans une plage de température comprise entre 130 et 300°C.

21. Procédé selon l'une des revendications 2 à 20, dans lequel la masse est travaillée sur site, est trempée et cuite après ce travail.
